# EUROPEAN PATENT SPECIFICATION

(11) **EP 3 391 172 B1**
(45) Date of publication and mention of the grant of the patent: **29.07.2020**
(21) Application number: 16876141.9
(22) Date of filing: 15.11.2016
(51) Int. Cl.: G05G 5/03, B60K 26/02, B60T 7/04, F02D 11/02, G05G 1/44

(54) **PEDAL FEEL SIMULATING SYSTEM FOR A PEDAL DEVICE**
PEDALGEFÜHLSSIMULATIONSSYSTEM FÜR EINE PEDALVORRICHTUNG
SYSTÈME DE SIMULATION DE SENSATION DE PÉDALE POUR UN DISPOSITIF À PÉDALE

(30) Priority: 16.12.2015 SE 1551663
(43) Date of publication of application: 24.10.2018
(73) Proprietor: CJ Automotive AB, 514 63 Dalstorp (SE)
(72) Inventor: ALF, Stefan, 514 60 Dalstorp (SE)
(74) Representative: Bergenstråhle Group AB
(86) International application number: PCT/SE2016/051123
(87) International publication number: WO 2017/105314

(56) References cited:
- WO-A1-2006/114075
- DE-A1- 4 300 096
- DE-A1-102012 217 541
- FR-A1- 2 967 224
- US-A1- 2012 216 651

## Description

### Technical field

The present invention relates generally to pedal feel simulating systems for a pedal device in motor vehicles.

### Background art

Historically, vehicles such as cars had a purely mechanical pedal system for brakes, clutches and accelerator pedals. In such mechanical pedal systems, a pedal such as the brake pedal was mechanically coupled to the brake discs via links and a hydraulic system etc so that when the driver pressed the brake pedal the car was automatically braked via the mechanical connection to the brake discs. Nowadays, car manufacturers are moving from mechanical pedal systems to electrical pedal systems. In electrical pedal systems, the car is controlled from a computer controlled system, actuated from the pedals in the car maneuvering different sensors. In the electrical pedal systems, there is a need to simulate for the driver a mechanical pedal system so that the driver perceives that for e.g. the brake, when he/she brakes harder, the car behaves as he/she is used to. This is important so that the driver feels comfortable behind the steering wheel.

In prior art it is known to use pedals with springs counteracting the depressing of the pedal. Such a pedal arm may act on a rotatably mounted lever arm to which a counter force is applied. The counter force may be generated by a lever spring which may be supported in one end on the housing and on the other end on the lever arm.

One solution is presented in DE 10 2005 035 067 A1 where an arrangement for operating a clutch is presented. The arrangement comprises a spring which upon movement of the clutch pedal between a starting position and an end position overcomes a dead point so that by means of the spring in at least one part of the movement of the clutch pedal a negative restoring force is exerted on the clutch pedal. The spring is connected by a first fastening point to means which describe a curved path in dependence upon the position of the clutch pedal and by a second fastening point connected to the clutch pedal.

A drawback of this type of pedals apparatus is that it neither generates a pleasant feel for the driver, nor generates a feel that resembles the depressing of an actual mechanical pedal such e.g. a clutch pedal. The pedal force constantly increases at a relatively high rate upon depressing the pedal. This is unnecessary strenuous for the driver. Another drawback is that it requires shaping a specific contour of the lever arm in order to create a specific pedal force curve.

### Summary of invention

An object of the present invention is to alleviate some of the disadvantages of the prior art and to provide a pedal feel simulating system for a pedal device which is simple and better emulates the feeling of an actual mechanical pedal.

Another object of the present invention is to provide a pedal feel simulating system for a pedal device which facilitates the creation of a plurality of separate pedal force curves depending on the need and requirements present.

According to one embodiment of the invention, a pedal feel simulating system for a pedal device is provided, comprising: a bracket device, a pedal arm pivotally arranged to the bracket device, wherein the pedal arm is pivotable between at least a first position and a second position upon increasing or reducing a load on the pedal arm, a link arm, a spring device, wherein the pedal arm is mechanically interconnected to the link arm at a variable position p on the link arm, wherein a first portion of the link arm is pivotally arranged to a first end of the spring device, and wherein a second portion of the link arm is pivotally arranged to the bracket device at a pivot point, wherein a second end of the spring device is pivotally arranged to the bracket device, wherein during the pivoting of the pedal arm from the first position towards the second position, the pedal arm is adapted to act on the link arm at the variable position p, creating a torque around the pivot point causing the link arm to rotate, wherein the position p on the link arm changes during pivoting of the pedal arm, whereby the first spring device is caused to rotate and being compressed simultaneously with the rotation of the link arm, whereby an increasing pedal force is generated counteracting the pivoting of the pedal arm from the first position towards the second position.

According to another embodiment, the pedal arm is mechanically interconnected to the link arm via a guide element that is slidingly connected to the link arm.

According to one embodiment, the pedal arm is arranged to the guide element, at a third portion of the pedal arm, wherein a slide portion of the guide element is slidingly arranged on the link arm at a sliding surface section of the link arm, corresponding to position p, between the second portion of the link arm and a third portion of the link arm.

According to one embodiment, the slide portion comprises at least a hysteresis element adapted to slide against a surface portion of the first link arm.

According to one embodiment, a compression of the spring device and thereby the resulting pedal force, initially increases at a first rate and eventually increases at a second rate, wherein the second rate is lower than the first rate, during the pivoting of the pedal arm from the first position towards the second position.

According to one embodiment, the distance from the position p to the second portion of the link arm decreases during pivoting of the pedal arm from the first to the second position.

According to one embodiment, a distance between the second and third portions of the link arm is arranged with an angle α in relation to the distance between the second and the first portion of the link arm, wherein the angle α is in the range of 55°≤α≤85°, preferably in the range of 60°≤α≤80°, more preferably in the range of 65°≤α≤75°.

According to one embodiment, the third portion of the link arm is a free end.

According to one embodiment, a return spring is connected to the third portion of the link arm, or to the pedal arm, for creating a return force biased to return the pedal arm from the second position to the first position.

According to one embodiment, the distance from a first end portion of the pedal arm to the third portion of the pedal arm is between 15% and 40% of an overall length of the pedal arm. The overall length of the pedal arm is a distance between the first end portion 2a and an opposite second end portion 2b of the pedal arm, i.e. opposite the first end portion.

According to one embodiment, a relative angle, between the pedal arm and the link arm at respective points on the pedal arm and the link arm, when the pedal arm is in a first position, is preferably between 10°and 30°, wherein the relative angle is more preferably between 15° and 25°, most preferably 18°.

According to one embodiment, the spring device has a first spring rate k1 in the range of 4 N/mm≤k1≤40 N/mm, more preferably in the range of 7 N/mm≤k1≤15 N/mm, most preferably 11 N/mm.

According to one embodiment, the pedal device is a clutch pedal device, a brake pedal device or an accelerator pedal device.

According to one embodiment, the hysteresis element comprises a friction pad.

According to one embodiment, the pedal arm is mechanically interconnected to the link arm via roll element that is rollably connected to the first link arm.

According to one embodiment, the distance between the position of where the second portion of the link arm is pivotally arranged to the bracket device, and the position of where the second portion of the spring device is pivotally arranged to the bracket device, and the distance between the first portion and the second portion are selected such that the spring device is maximally compressed 30% of an entire free, or uncompressed, length of the spring device during pivoting between the first position towards the second position.

According to one embodiment, a pedal device is provided, wherein the pedal device comprises a pedal feel simulating system according to any of the embodiments described in [0008]-[0023] above.

### Brief description of drawings

The invention is now described, by way of example, with reference to the accompanying drawings, in which:
Fig. 1a shows a perspective view of a pedal feel simulating system for a pedal device according to the invention in a first position.
Fig. 1b shows a side view of a pedal feel simulating system for a pedal device according to Fig. 1a.
Figs. 2a shows a perspective view of a pedal feel simulating system for a pedal device according to the invention of Fig. 1a, Fig 1b in a second position.
Figs. 2b shows a perspective view of a pedal feel simulating system for a pedal device according to the invention of Fig. 2a.
Figs. 3 shows a pedal force curve obtainable by the pedal feel system for a pedal device according to Fig. 1a.

### Description of embodiments

In the following, a detailed description of the invention will be given. In the drawing figures, like reference numerals designate identical or corresponding elements throughout the several figures. It will be appreciated that these figures are for illustration only and are not in any way restricting the scope of the invention.

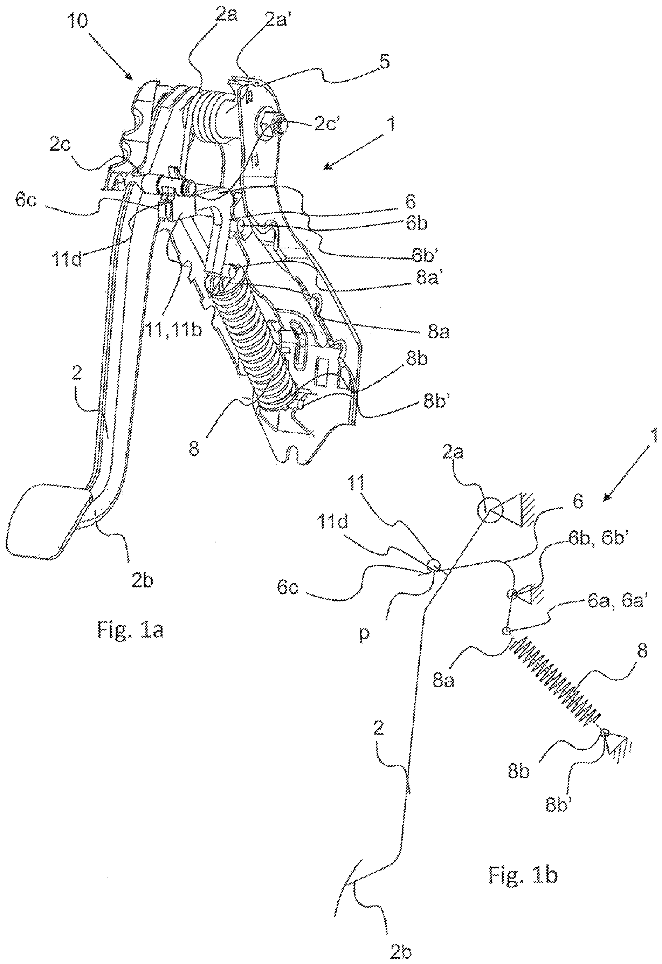

Fig. 1a shows a perspective view of a pedal feel simulating system 1 for a pedal device 10 according to the invention. Pedal arm 2 is pivotally arranged in relation to a bracket 5 device at a portion 2a of the pedal arm 2 by the aid of a pivot shaft 2a', i.e. the pedal arm 2 is pivotally arranged to the bracket device 5. The pedal arm 2 is pivotable between at least a first position and a second position upon increasing or reducing a load on the pedal arm. According to one embodiment, the pedal arm 2 is pivoting from the first position towards the second position upon increasing a sufficient load on the pedal arm 2 and pivoting from a second position towards the first position upon sufficiently reducing a load on the pedal arm 2. By being pivotally arranged in relation to the bracket device 5, the pedal arm 2 may be arranged directly to the bracket device 5 or via other parts. According to one embodiment, the portion 2a is essentially at an end point of the pedal arm 2. According to one embodiment, a pedal portion is arranged at the opposite end portion 2b of the pedal arm 2. The bracket device 5 may be rigidly arranged to another second bracket 4 (not shown) or the vehicle body. According to one embodiment, the bracket device 5 may be arranged to a second bracket 4 or the vehicle body (not shown), by the aid of bolts, or a screws and nut connection.

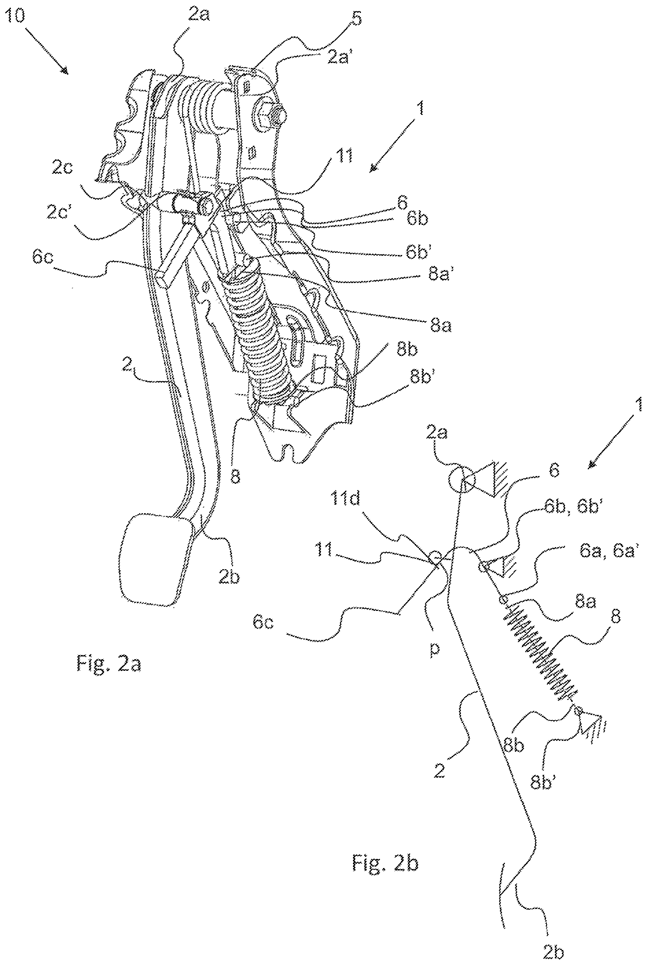

A link arm 6 of the pedal feel simulating system 1 is provided, wherein a first portion 6a of the link arm 6 is pivotally arranged to a first end 8a of a spring device 8, wherein the second end 8b of the spring device 8 is pivotally arranged to the bracket device 5. A second portion 6b of the link arm 6 is pivotally arranged to the bracket device 5 at a pivot point 6b', and thus adapted to pivot in relation to the bracket device 5. According to one embodiment, the portion 6a is essentially at an end point of the link arm 6, as seen in Fig. 1a for instance. A guide element 11 is arranged at a third portion 2c of the pedal arm 2, via a relatively short pin portion extending essentially perpendicular from the pedal arm 2. According to one embodiment, the guide element 11 is pivotally arranged at a third portion 2c by the aid of a pivot axis 2c'. According to one embodiment, the third portion 2c/pivot axis 2c' is arranged at a distance from the end portion 2a which is between 15% to 40% of the overall length of the pedal arm 2, i.e. the distance between the end portions 2a and 2b. According to one embodiment, the pivot axis 2c' is arranged at a distance from the end portion 2a which is 25% the overall length of the pedal arm 2. A second portion 11b of the guide element 11 is arranged on the link arm 6, wherein the pedal arm 2 is mechanically interconnected to the link arm 6 at a variable position p, see e.g. Fig. 1b, 2b. According to one embodiment, the mechanical interconnection between the pedal arm 2 and the link arm 6 is manifested by that the guide element 11 is slidingly arranged on the link arm 6. According to one embodiment, the guide element 11 comprises a slide portion 11b which comprises at least a hysteresis element 11d adapted to slide against a surface portion of the link arm 6. According to one embodiment, the hysteresis element 11d is formed by the inner surface of the guide element 11. According to one embodiment, the relative angle, i.e. the "attack angle" between the pedal arm 2 and the link arm 6 at respective points on the pedal arm 2 and the link arm 6, when the pedal arm 2 is in a first position, is between 10°and 30°. According to one embodiment, the relative angle is between 15° and 25°. According to one embodiment the relative angle is 18°. According to one embodiment, the hysteresis element 11d comprises a plastic pad or friction pad. According to one embodiment, the surface portion 6d of the link arm 6 adapted to receive the hysteresis portion 11d is a curved surface portion 6d. According to one embodiment, the surface portion 6d of the link arm 6 adapted to receive the hysteresis portion 11d is a straight surface portion 6d. According to one embodiment, the surface portion 6d has been processed by means of blasting, whereby a surface structure is formed on the surface portion 6d which will prevent unwanted noise. According to other embodiments, the surface portion 6d has been formed by moulding, casting or sintering. According to one embodiment, the slide portion 11b comprises a plurality of wall portions that at least partly encompasses the link arm 6 and whose inner portions are adapted to slide against a respective surface portion of the link arm 6. According to one embodiment, the pedal arm 2 is mechanically interconnected to the link arm 6 via a roll element, that is rollably connected or engaging the first link arm 6. According to one embodiment, guide element 11 is thus in the form of a roll element.

According to one embodiment, the link arm 6 further comprises a third portion 6c, essentially corresponding to an end portion of the link arm 6. According to one embodiment, the third portion 6c of the link arm 6 is a free end, for instance is not rotationally connected to any other part. According to one embodiment, the third portion 6c of the link arm 6 is closed, i.e. comprises means for preventing the guide element from sliding of the free end. Such means could e.g. be a lateral extension of the link arm 6 or a lateral extension portion formed on the link arm 6. According to one embodiment, a return spring is connected to the third portion 6c of the link arm 6, for creating a return force biased to return the pedal arm 2 from the second position to the first position. According to one embodiment, a return spring is connected to the pedal arm 2 for creating a return force biased to return the pedal arm 2 from the second position to the first position.

According to one embodiment, a distance between the second portion 6b and third portion 6c of the link arm 6, i.e. a straight line between the second 6b and third portion 6c, is arranged with an angle α in relation to the distance between the second portion 6b and the first portion 6a of the link arm 6, i.e. a straight line between the second 6b and first portion 6a. According to one embodiment, the angle α is in the range of 55°≤α≤85°, preferably in the range of 60°≤α≤80°, more preferably in the range of 65°≤α≤75°. According to one embodiment, the angle α is selected based on the desired length of the travel of the variable point p along the link arm 6 as later described, i.e. by the length of the movement of the guide element 11 on the link arm 6.

The spring device 8 is arranged to the link arm 6 at a first portion 8a of the spring device 8. According to one embodiment, the first portion 8a is pivotally arranged to the link arm 6 via a pivot shaft, preferably the pivot shaft 6a'. A second portion 8b of the spring device 8 is arranged to the bracket device 5. According to one embodiment, the second portion 8b is pivotally arranged to the bracket device 5 in a loose articulated manner, for instance by the aid of a joint or hinge member. According to one embodiment, the spring device 8 is pivotally arranged to the bracket device 5, via a pivot shaft 8b'. According to one embodiment, the spring rate k of the spring device 8 is in the range of 4 N/mm≤k1≤40 N/mm, more preferably in the range of 7 N/mm≤k1≤15 N/mm. According to one embodiment, the first spring rate is 11 N/mm. According to one embodiment, the spring device 8 may comprise a plurality of springs. According to one embodiment, the plurality of springs may be arranged coaxially in relation to each other. According to one embodiment, the plurality of springs may have different spring rates.

Fig. 1a and Fig. 1b shows a perspective view and a side view respectively of the pedal feel simulating system 1 for a pedal device 10 in a first position of the pedal arm 2. According to one embodiment the first position corresponds to an equilibrium state of the pedal feel simulating system 1. According to one embodiment, the first position corresponds to a state of the pedal feel simulating system 1, wherein the pedal arm 2 is in its most expanded, i.e. least compressed or activated, state. Further, the guide element 11 is in a first position p along the link arm 6, and the spring device 8 is in its most extended positions available in the pedal feel simulating system 1. According to one embodiment, the spring device 8 is uncompressed in a first position of the pedal arm 2. According to one embodiment, the spring device 8 is slightly compressed in the first position to avoid noise and vibration in the pedal feel simulating system 1. According to one embodiment, the pedal arm 2 rests against a stop (not shown) which prevents a returning movement further beyond the first position, whereby the spring device 8 can always be held slightly compressed.

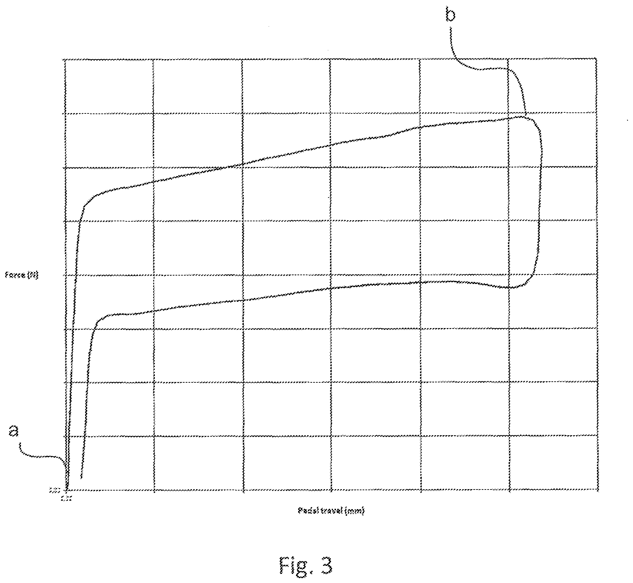

Fig. 2a and Fig. 2b shows a perspective view and side view respectively of the pedal feel simulating system 1 for a pedal device 10 in a second position of the pedal arm 2 whereby the pedal arm 2 has pivoted around the pivot shaft 2a' from the position of Figs. 1a, 1b. Since the pivot points 2a' and 6b' are not in the identical spatial position, i.e. the can be seen as two separate eccentric circular movement paths, the guide element 11 have moved, e.g. slid, slightly along the link arm 6, during the pivoting of the pedal arm 2 from the first towards the second position, i.e. the hysteresis portion 11d has slid along the surface 6d of the link arm 6. Thus, the pedal arm 2 is adapted to act on the link arm 6 at the variable position p creating a torque around pivot point 6b' causing the link arm 6 to rotate, wherein the position p changes during pivoting of the pedal arm 2.Thus, a force is transmitted from the pedal arm 2 via the guide element 11 to the link arm 6 causing the pivot arm 6 to pivot around the pivot shaft 6b'. As a result, the spring device 8 is caused to rotate and being compressed simultaneously with the rotation of the link arm 6. According to one embodiment, the spring device 8 rotates around pivot shaft 8b'. Thus, an increasing pedal force is generated counteracting the pivoting of the pedal arm 2 from the first position towards the second position. According to one embodiment, the distance from the variable position p to the second portion 6b of the link arm 6 decreases during pivoting of the pedal arm 2 from the first to the second position. According to one embodiment, the moment arm around pivot point 6b' will thus decrease requiring a increasing pedal force to create the same magnitude of the torque around pivot point 6b'. This effect will contribute to the pedal force curve shown in Fig. 3. According to one embodiment, the distance from the position p to the second portion 6b of the link arm 6 increases during pivoting of the pedal arm 2 from the first to the second position. According to one embodiment, the moment arm around pivot point 6b' will thus increase requiring a decreasing pedal force to create the same magnitude of the torque around pivot point 6b'. Thus, according to one embodiment, the variable position p corresponds to a variable or changing gearing during pivoting of the pedal arm 2.

The rotations of the link arm 6 and spring device 8 respectively can be seen as two separate eccentric circular movement paths around their respective pivot points, 6b' and 8b'. The circular movement path of the link arm 6 will have a radius given by the radial extension length from the pivot point 6b' to the point 6a. According to one embodiment, such radial extension will correspond to the length from 6b to 6a provided this portion has a straight shape. The circular movement path of the spring device will have a radius given by the spring device 8 length from the pivot point 8b' to the point 8a in a non-compressed state to the point 8a. These two circles will have an overlap, hence the rotation of the link arm 6 will cause the spring device 8 to be compressed during rotation of the link arm 6 along with the rotation of the spring device 8. Due to that the change of rate of the overlap will vary during the rotation, so will the compression rate of the spring 8, and hence the rate of change of the resulting pedal force. This effect will contribute to the pedal force curve as seen in Fig. 3, having a steeply increasing pedal force initially during depression of the pedal 2, whereafter the pedal force will not increase as steeply, i.e. will flatten out. Hence, according to one embodiment, a compression of the spring device 8 and thereby the resulting pedal force, initially increases at a first rate and eventually increases at a second rate, wherein the second rate is lower than the first rate, during pivoting of the pedal arm 2 from the first to the second position.

According to one embodiment, the distance between the position of where the second portion 6b of the link arm 6 is pivotally arranged to the bracket device 5, and the position of where the second portion 8b of the spring device 8 is pivotally arranged to the bracket device 5, and the distance between the first portion 6a and the second portion 6b are selected such that the spring device 8 is maximally compressed 30% of the entire free, or un-compressed, length of the spring device 8 during a pivoting between a first position towards a second position. According to one embodiment, such selection will allow the spring to pass life-span requirements. The variables are thus several, and the selection may be based on the conditions and requirements of the pedal simulating systems as well as the pedal device 10 in general. For instance, if there is much space in the compartment of the vehicle, a longer spring with lower spring rate may be used. In smaller compartments, the spring may have to be arranged in unsuitable locations which may require the spring to be short spring with high spring rate. According to one embodiment, the selection may be made such that an over-center movement of the spring 8 is allowed during depression of the pedal arm 2, i.e. wherein the spring is allowed to extend, i.e. decompress in a later part of such movement. Thus, if required for the pedal device application in question, and intended use thereof, a pedal force curve may be created which decreases during the late part of the depression movement. According to one embodiment, in such cases, the use of a return spring arranged on the link arm 6 as described above may be particularly useful to return the spring device 8.

Figs. 3 shows the pedal force acting on the driver in relation to the amount of depression or movement or pivoting of the pedal arm 2, i.e. in relation to the positions described in Figs. 1a, 1b, and Figs. 2a, 2b with corresponding markings a, b referring to said positions respectively in Fig. 3. Fig. 3 shows a pedal force curve wherein the pedal feel simulating system 1 for a pedal device 10 may suitably be used in a clutch pedal device, i.e. wherein the variables of the pedal feel simulating system 1 described above have been selected to achieve this pedal force curve. As can be seen in Fig. 3, the hysteresis effect is shown in the drop of the pedal force curve following a reaching of the second position of the pedal arm 2 and the allowing of a movement towards the first position. The hysteresis effect is desirable since a driver should desirably sense that a releasing of the pedal arm or reducing of the load/pedal force on the pedal arm 2 does not result in that the pedal arm 2 moves to fast from the second towards the first position. The hysteresis effect is generated for instance from the hysteresis element 11d and any internal friction in the pedal simulating system 1, such as friction within the spring or in the connections between the described movable parts of the pedal simulating system 1.

## Claims

1. A pedal feel simulating system (1) for a pedal device (10) comprising:
a bracket device (5)
a pedal arm (2) pivotally arranged to the bracket device (5), wherein the pedal arm is pivotable between at least a first position and a second position upon increasing or reducing a load on the pedal arm (2),
a link arm (6)
a spring device (8)
wherein the pedal arm (2) is mechanically interconnected to the link arm (6) at a variable position (p) on the link arm (6), wherein a first portion (6a) of the link arm (6) is pivotally arranged to a first end (8a) of the spring device (8), and wherein a second portion (6b) of the link arm (6) is pivotally arranged to the bracket device (5) at a pivot point (6b'), wherein a second end (8b) of the spring device (8) is pivotally arranged to the bracket device (5),
wherein during the pivoting of the pedal arm (2) from the first position towards the second position, the pedal arm (2) is adapted to act on the link arm (6) at the variable position (p), creating a torque around the pivot point (6b') causing the link arm (6) to rotate, wherein the position (p) on the link arm changes during pivoting of the pedal arm (2), whereby the spring device (8) is caused to rotate around its second end (8b) and being compressed simultaneously with the rotation of the link arm (6), whereby an increasing pedal force is generated counteracting the pivoting of the pedal arm (2) from the first position towards the second position.

2. The pedal feel simulating system (1) according to claim 1, wherein the pedal arm (2) is mechanically interconnected to the link arm (6) via a guide element (11) that is slidingly connected to the link arm (6).

3. The pedal feel simulating system (1) according to claim 2, wherein the pedal arm (2) is pivotally arranged to the bracket device (5) at a portion (2a) of the pedal arm (2), the portion (2a) of the pedal arm (2) being essentially an end point of the pedal arm (2) and the pedal arm (2) further comprises an opposite end portion (2b), and the pedal arm (2) is arranged to the guide element (11), at a third portion (2c) arranged at a distance from the end portion (2a) of the pedal arm (2), which distance is between the end portions (2a, 2b), wherein a slide portion (11b) of the guide element (11) is slidingly arranged on the link arm (6) at a sliding surface section of the link arm (6), corresponding to position (p), between the second portion (6b) of the link arm (6) and a third portion (6c) of the link arm (6), and wherein the first portion (6a) of the link arm (6) is essentially at an end point of the link arm (6) and the third portion (6c) of the link arm (6) is a free end.

4. The pedal feel simulating system (1) according to claim 3, wherein the slide portion (11b) comprises at least a hysteresis element (11d) adapted to slide against a surface portion of the first link arm (6).

5. The pedal feel simulating system (1) according to any of the previous claims, wherein a compression of the spring device (8) and thereby the resulting pedal force, initially increases at a first rate and eventually increases at a second rate, wherein the second rate is lower than the first rate, during the pivoting of the pedal arm (2) from the first position towards the second position.

6. The pedal feel simulating system (1) according to any of the previous claims, wherein the distance from the position (p) to the second portion (6b) of the link arm (6) decreases during pivoting of the pedal arm (2) from the first to the second position.

7. The pedal feel simulating system (1) according to claim 3, wherein a distance between the second (6b) and third (6c) portions of the link arm (6) is arranged with an angle in relation to the distance between the second (6b) and the first (6a) portion of the link arm (6), wherein the angle is in the range of 55° - 85°, preferably in the range of 60° - 80°, more preferably in the range of 65° - 75°.

8. The pedal feel simulating system (1) according to any of claims 3 or 7, wherein a return spring is connected to the third portion (6c) of the link arm (6) or to the pedal arm (2), for creating a return force biased to return the pedal arm (2) from the second position to the first position.

9. The pedal feel simulating system (1) according to claim 3, wherein the distance from a first end portion (2a) of the pedal arm to the third portion (2c) of the pedal arm (2) is between 15% to 40% of the overall length of the pedal arm (2), wherein the overall length of the pedal arm (2) is the distance between the first end portion (2a) and an opposite end portion (2b) of the pedal arm.

10. The pedal feel simulating system (1) according to any of the previous claims, wherein the spring device (8) has a spring rate k1 in the range of 4 N/mm≤k1≤40 N/mm, more preferably in the range of 7 N/mm≤k1≤15 N/mm, most preferably 11 N/mm.

11. The pedal feel simulating system (1) according to any of the previous claims, wherein the pedal device (2) is a clutch pedal device, a brake pedal device or an accelerator pedal device.

12. A pedal device (10) comprising a pedal simulating system (1) according to any of the previous claims 1-11.

## Patentansprüche

1. Pedalgefühlssimulationssystem (1) für eine Pedalvorrichtung (10), umfassend:
eine Halterungsvorrichtung (5),
einen Pedalarm (2), der schwenkbar an der Halterungsvorrichtung (5) angeordnet ist, wobei der Pedalarm beim Erhöhen oder Verringern einer Last an dem Pedalarm (2) zwischen mindestens einer ersten Position und einer zweiten Position schwenkbar ist,
einen Verbindungsarm (6),
eine Federvorrichtung (8),
wobei der Pedalarm (2) an einer variablen Position (p) am Verbindungsarm (6) mechanisch mit dem Verbindungsarm (6) verbunden ist, wobei ein erster Teil (6a) des Verbindungsarms (6) schwenkbar an einem ersten Ende (8a) der Federvorrichtung (8) angeordnet ist, und wobei ein zweiter Teil (6b) des Verbindungsarms (6) an einem Drehpunkt schwenkbar an der Halterungsvorrichtung (5) angeordnet ist, wobei ein zweites Ende (8b) der Federvorrichtung (8) schwenkbar an der Halterungsvorrichtung (5) angeordnet ist,
wobei der Pedalarm (2) dazu ausgeführt ist, während des Schwenkens des Pedalarms (2) aus der ersten Position in Richtung der zweiten Position an der variablen Position (p) auf den Verbindungsarm (6) einzuwirken, wodurch ein Drehmoment um den Drehpunkt (6b') erzeugt wird, das ein Drehen des Verbindungsarms (6) bewirkt, wobei sich die Position (p) an dem Verbindungsarm während des Schwenkens des Pedalarms (2) ändert, wodurch bewirkt wird, dass sich die Federvorrichtung (8) um ihr zweites Ende (8b) dreht und gleichzeitig mit der Drehung des Verbindungsarms (6) komprimiert wird, wodurch eine zunehmende Pedalkraft erzeugt wird, die dem Schwenken des Pedalarms (2) aus der ersten Position in Richtung der zweiten Position entgegenwirkt.

2. Pedalgefühlssimulationssystem (1) nach Anspruch 1, wobei der Pedalarm (2) über ein Führungselement (11), das mit dem Verbindungsarm (6) verschiebbar verbunden ist, mechanisch mit dem Verbindungsarm (6) verbunden ist.

3. Pedalgefühlssimulationssystem (1) nach Anspruch 2, wobei der Pedalarm (2) an einem Teil (2a) des Pedalarms (2) schwenkbar an der Halterungsvorrichtung (5) angeordnet ist, wobei sich der Teil (2a) des Pedalarms (2) im Wesentlichen an einem Endpunkt des Pedalarms (2) befindet und der Pedalarm (2) ferner einen gegenüberliegenden Endteil (2b) umfasst, und der Pedalarm (2) an einem dritten Teil (2c), der in einem Abstand von dem Endteil (2a) des Pedalarms (2) angeordnet ist, an dem Führungselement (11) angeordnet ist, wobei sich der Abstand zwischen den Endteilen (2a, 2b) befindet, wobei ein Gleitteil (11b) des Führungselements (11) an einem Gleitflächenabschnitt des Verbindungsarms (6), der der Position (p) entspricht, verschiebbar an dem Verbindungsarm (6) angeordnet ist, und wobei sich der erste Teil (6a) des Verbindungsarms (6) im Wesentlichen an einem Endpunkt des Verbindungsarms (6) befindet und der dritte Teil (6c) des Verbindungsarms (6) ein freies Ende ist.

4. Pedalgefühlssimulationssystem (1) nach Anspruch 3, wobei der Gleitteil (11b) mindestens ein Hystereseelement (11d) umfasst, das dazu ausgeführt ist, gegen einen Flächenteil des ersten Verbindungsarms (6) zu gleiten.

5. Pedalgefühlssimulationssystem (1) nach einem der vorhergehenden Ansprüche, wobei ein Zusammendrücken der Federvorrichtung (8) und dadurch die sich ergebende Pedalkraft während des Schwenkens des Pedalarms (2) aus der ersten Position in Richtung der zweiten Position anfangs mit einer ersten Rate zunimmt und schließlich mit einer zweiten Rate zunimmt, wobei die zweite Rate geringer als die erste Rate ist.

6. Pedalgefühlssimulationssystem (1) nach einem der vorhergehenden Ansprüche, wobei der Abstand von der Position (p) zu dem zweiten Teil (6b) des Verbindungsarms (6) während des Schwenkens des Pedalarms (2) aus der ersten in die zweite Position abnimmt.

7. Pedalgefühlssimulationssystem (1) nach Anspruch 3, wobei ein Abstand zwischen dem zweiten (6b) und dem dritten (6c) Teil des Verbindungsarms (6) mit einem Winkel bezüglich des Abstands zwischen dem zweiten (6b) und dem ersten (6a) des Verbindungsarms (6) angeordnet ist, wobei der Winkel im Bereich von 55° - 85°, vorzugsweise im Bereich von 60° - 80°, besonders bevorzugt im Bereich von 65° - 75° liegt.

8. Pedalgefühlssimulationssystem (1) nach einem der Ansprüche 3 oder 7, wobei eine Rückstellfeder mit dem dritten Teil (6c) des Verbindungsarms (6) oder dem Pedalarm (2) verbunden ist, um eine Rückstellkraft zu erzeugen, die zum Zurückführen des Pedalarms (2) aus der zweiten Position in die erste Position vorgespannt ist.

9. Pedalgefühlssimulationssystem (1) Anspruch 3, wobei der Abstand von dem ersten Endteil (2a) des Pedalarms zu dem dritten Teil (2c) des Pedalarms (2) zwischen 15% und 40% der Gesamtlänge des Pedalarms (2) beträgt, wobei die Gesamtlänge des Pedalarms (2) der Abstand zwischen dem ersten Endteil (2a) und einem gegenüberliegenden Endteil (2b) des Pedalarms ist.

10. Pedalgefühlssimulationssystem (1) nach einem der vorhergehenden Ansprüche, wobei die Federvorrichtung (8) eine Federrate k1 im Bereich von 4 N/mm≤k1≤40 N/mm, vorzugsweise im Bereich von 7 N/mm≤k1≤15 N/mm, besonders bevorzugt von 11 N/mm aufweist.

11. Pedalgefühlssimulationssystem (1) nach einem der vorhergehenden Ansprüche, wobei die Pedalvorrichtung (2) eine Kupplungspedalvorrichtung, eine Bremspedalvorrichtung oder eine Fahrpedalvorrichtung ist.

12. Pedalvorrichtung (10), die ein Pedalsimulationssystem (1) nach einem der vorhergehenden Ansprüche 1 - 11 umfasst.

## Revendications

1. Système de simulation de sensation de pédale (1) pour un dispositif de pédale (10), comprenant :
un dispositif de console (5)
un bras de pédale (2) disposé de manière pivotante sur le dispositif de console (5), le bras de pédale pouvant pivoter entre au moins une première position et une deuxième position lors de l'augmentation ou de la réduction d'une charge appliquée au bras de pédale (2),
un bras de liaison (6),
un dispositif de ressort (8),
le bras de pédale (2) étant interconnecté mécaniquement au bras de liaison (6) à une position variable (p) sur le bras de liaison (6), une première portion (6a) du bras de liaison (6) étant disposée de manière pivotante sur une première extrémité (8a) du dispositif de ressort (8), et une deuxième portion (6b) du bras de liaison (6) étant disposée de manière pivotante sur le dispositif de console (5) au niveau d'un point de pivotement (6b'), une deuxième extrémité (8b) du dispositif de ressort (8) étant disposée de manière pivotante sur le dispositif de console (5),
le bras de pédale (2), au cours du pivotement du bras de pédale (2) de la première position vers la deuxième position, étant prévu pour agir sur le bras de liaison (6) au niveau de la position variable (p) en créant un couple autour du point de pivotement (6b') en provoquant la rotation du bras de liaison (6), la position (p) sur le bras de liaison variant au cours du pivotement du bras de pédale (2), ce par quoi le dispositif de ressort (8) est amené à tourner autour de sa deuxième extrémité (8b) et est comprimé simultanément avec la rotation du bras de liaison (6), ce par quoi une force de pédale croissante est générée, s'opposant au pivotement du bras de pédale (2) de la première position vers la deuxième position.

2. Système de simulation de sensation de pédale (1) selon la revendication 1, dans lequel le bras de pédale (2) est interconnecté mécaniquement au bras de liaison (6) par le biais d'un élément de guidage (11) qui est connecté de manière coulissante au bras de liaison (6).

3. Système de simulation de sensation de pédale (1) selon la revendication 2, dans lequel le bras de pédale (2) est disposé de manière pivotante sur le dispositif de console (5) au niveau d'une portion (2a) du bras de pédale (2), la portion (2a) du bras de pédale (2) étant essentiellement un point d'extrémité du bras de pédale (2) et le bras de pédale (2) comprenant en outre une portion d'extrémité opposée (2b) et le bras de pédale (2) étant disposé sur l'élément de guidage (11), au niveau d'une troisième portion (2c) disposée à distance de la portion d'extrémité (2a) du bras de pédale (2), ladite distance étant entre les portions d'extrémité (2a, 2b), une portion de coulissement (11b) de l'élément de guidage (11) étant disposée de manière coulissante sur le bras de liaison (6) au niveau d'une section de surface coulissante du bras de liaison (6), correspondant à la position (p), entre la deuxième portion (6b) du bras de liaison (6) et une troisième portion (6c) du bras de liaison (6), et la première portion (6a) du bras de liaison (6) étant essentiellement au niveau d'un point d'extrémité du bras de liaison (6) et la troisième portion (6c) du bras de liaison (6) étant une extrémité libre.

4. Système de simulation de sensation de pédale (1) selon la revendication 3, dans lequel la portion de coulissement (11b) comprend au moins un élément d'hystérésis (11d) prévu pour coulisser contre une portion de surface du premier bras de liaison (6).

5. Système de simulation de sensation de pédale (1) selon l'une quelconque des revendications précédentes, dans lequel une compression du dispositif de ressort (8), et par conséquent la force de pédale résultante, augmente initialement à un premier taux et augmente ensuite à un deuxième taux, le deuxième tour étant inférieur au premier taux, au cours du pivotement du bras de pédale (2) de la première position vers la deuxième position.

6. Système de simulation de sensation de pédale (1) selon l'une quelconque des revendications précédentes, dans lequel la distance de la position (p) à la deuxième portion (6b) du bras de liaison (6) diminue au cours du pivotement du bras de pédale (2) de la première à la deuxième position.

7. Système de simulation de sensation de pédale (1) selon la revendication 3, dans lequel une distance entre les deuxième (6b) et troisième (6c) portions du bras de liaison (6) est disposée suivant un angle par rapport à la distance entre les deuxième (6b) et première (6a) portions du bras de liaison (6), l'angle étant compris dans une plage de 55° à 85°, de préférence dans la plage de 60° à 80°, plus préférablement dans la plage de 65° à 75°.

8. Système de simulation de sensation de pédale (1) selon l'une quelconque des revendications 3 ou 7, dans lequel un ressort de rappel est connecté à la troisième portion (6c) du bras de liaison (6) ou au bras de pédale (2) pour créer une force de retour sollicitée de manière à ramener le bras de pédale (2) de la deuxième position à la première position.

9. Système de simulation de sensation de pédale (1) selon la revendication 3, dans lequel la distance d'une première portion d'extrémité (2a) du bras de pédale à la troisième portion (2c) du bras de pédale (2) est comprise entre 15 % et 40 % de la longueur totale du bras de pédale (2), la longueur totale du bras de pédale (2) étant la distance entre la première portion d'extrémité (2a) et une portion d'extrémité opposée (2b) du bras de pédale.

10. Système de simulation de sensation de pédale (1) selon l'une quelconque des revendications précédentes, dans lequel le dispositif de ressort (8) présente une constante de ressort (k1) dans la plage de 4 N/mm ≤ k1 ≤ 40 N/mm, plus préférablement dans la plage de 7 N/mm ≤ k1 ≤ 15 N/mm, plus préférablement de 11 N/mm.

11. Système de simulation de sensation de pédale (1) selon l'une quelconque des revendications précédentes, dans lequel le dispositif de pédale (2) est un dispositif de pédale d'embrayage, un dispositif de pédale de frein ou un dispositif de pédale d'accélérateur.

12. Dispositif de pédale (10) comprenant un système de simulation de pédale (1) selon l'une quelconque des revendications précédentes 1 à 11.
